# FASCICULE DE BREVET EUROPEEN

(11) **EP 2 737 686 B1**
(45) Date de publication et mention de la délivrance du brevet: **28.08.2019**
(21) Numéro de dépôt: 12735913.1
(22) Date de dépôt: 20.07.2012
(51) Int. Cl.: H04L 29/08, H04L 12/24, H04L 29/06, H04L 12/28

(54) **PROCÉDÉ DE GESTION DE L'ACCÈS À UN ENSEMBLE DE RESSOURCES DÉLIVRÉES PAR UN DISPOSITIF ÉLECTRONIQUE**
VERFAHREN ZUR VERWALTUNG DES ZUGANGS ZU EINEM SATZ VON BETRIEBSMITTELN ÜBER EINE ELEKTRONISCHE VORRICHTUNG
METHOD FOR MANAGING ACCESS TO A SET OF RESOURCES DELIVERED VIA AN ELECTRONIC DEVICE

(30) Priorité: 29.07.2011 FR 1156987
(43) Date de publication de la demande: 04.06.2014
(73) Titulaire: Sagemcom Energy & Telecom SAS, 92500 Rueil-Malmaison (FR)
(72) Inventeur: HARNAY, Franck, F-92500 Rueil Malmaison (FR)
(74) Mandataire: Cabinet Le Guen Maillet
(86) Numéro de dépôt international: PCT/EP2012/064309
(87) Numéro de publication internationale: WO 2013/017442

(56) Documents cités:
- US-A1- 2001 025 307
- US-A1- 2004 128 346
- PEISEL B: "DESIGNING THE NEXT STEP IN INTERNET APPLIANCES", ELECTRONIC DESIGN, PENTON MEDIA, CLEVELAND, OH, US, vol. 46, no. 7, 23 mars 1998 (1998-03-23), page 50,52,56, XP000780455, ISSN: 0013-4872

## Description

La présente invention concerne le domaine de la gestion de l'accès à des ressources par un dispositif électronique, notamment dans le cas où ce dispositif est contrôlé par un logiciel embarqué stocké en mémoire non volatile réinscriptible.

De plus en plus de dispositifs électroniques sont connectés à Internet. Ils sont également accessibles typiquement via un réseau de communication local à partir de clients locaux tels que des ordinateurs portables, des téléphones intelligents, des ordinateurs tablettes, etc. On peut citer parmi ces dispositifs, les passerelles domestiques connues sous le nom de *box* en anglais ou encore les dernières générations de téléviseurs ou de décodeurs d'offres de télévision, des compteurs électriques intelligents et autres.

Ces dispositifs sont typiquement contrôlés par un logiciel embarqué (*firmware* en anglais) stocké en mémoire non volatile réinscriptible appelée mémoire *flash* en anglais. Ces dispositifs offrent typiquement la possibilité de les configurer ou d'en exploiter les données par une interface accessible depuis un client local sur le réseau domestique de l'usager. Typiquement le protocole utilisé est le protocole HTTP (*Hyper Text Transfer Protocol* en anglais). Pour ce faire, un serveur WEB est implémenté au sein du logiciel embarqué pour offrir au client local un accès à une interface de gestion du dispositif à l'aide d'un navigateur WEB standard. Ce serveur WEB permet l'accès par le client à des ressources délivrées par le dispositif. La description est basée sur l'utilisation du protocole HTTP et donc d'un serveur WEB, mais l'invention peut se baser sur tout autre protocole permettant un accès aux ressources d'un dispositif de manière similaire, par exemple le protocole FTP (*File Transfer Protocol* en anglais) bien qu'il soit moins souple d'utilisation.

Ce type de dispositif possède généralement des ressources limitées, notamment en mémoire. De plus, lorsqu'un opérateur est chargé de la gestion d'un parc de dispositifs et qu'il souhaite faire évoluer l'interface de gestion du dispositif par le client local il est alors nécessaire de mettre à jour le logiciel embarqué du dispositif ce qui nécessite une infrastructure complexe et difficile à gérer dès lors que le parc installé de dispositifs est important. On peut également souhaiter personnaliser cette interface pour une catégorie d'usager ou un même modèle de dispositif peut être fabriqué par un même constructeur et géré par différents opérateurs. Il faut alors gérer une interface hétérogène pour un même modèle de dispositif.

La publication de demande de brevet US 2001/025307 A1 décrit un dispositif disposant d'un serveur web embarqué et aborde donc la gestion d'accès à un ensemble de ressources délivrées par un dispositif électronique contrôlé par un logiciel embarqué.

L'invention vise à résoudre les problèmes précédents par l'utilisation d'un module de redirection sélective (*reverse proxy* en anglais) sur le dispositif qui permet de localiser une partie des ressources de l'interface de gestion sur un serveur distant. L'accès à ces ressources provoque une redirection de la requête vers le serveur distant dont la réponse est ensuite transmise au client local par le dispositif comme si elle était issue directement du dispositif. De cette façon, le dispositif gère un nombre réduit de ressources en local, typiquement les ressources générées par le dispositif. Lorsque l'on souhaite faire évoluer le service de gestion, il suffit de mettre à jour les ressources distantes pour faire évoluer le service. Il n'est plus nécessaire de déployer une nouvelle version du logiciel embarqué sur le parc de dispositifs.

L'invention concerne un procédé de gestion de l'accès à un ensemble de ressources délivrées par un dispositif électronique selon la revendication 1, un dispositif électronique selon la revendication 5, un programme d'ordinateur selon la revendication 6 et un support d'enregistrement selon la revendication 7.

Les modes de réalisation particuliers sont spécifiés dans les revendications dépendantes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture d'un exemple de réalisation du système intégrant l'invention.
La Fig. 2 illustre les composants de l'invention selon un exemple de l'invention.
La Fig. 3 illustre le procédé de fonctionnement d'un exemple de réalisation de l'invention.

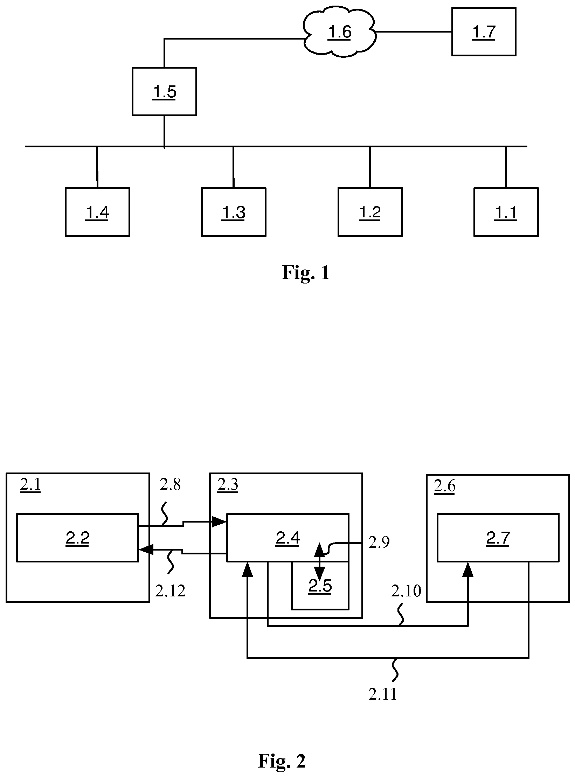

L'invention concerne un dispositif utilisé typiquement dans une architecture telle qu'illustrée Fig. 1. Dans cette architecture, on dispose de plusieurs appareils 1.1, 1.2, 1.3 et 1.4 connectés à un réseau local. Ces appareils peuvent donc communiquer entre eux. Une passerelle domestique 1.5 est également connectée au réseau local et donne accès à un réseau de communication 1.6. Cette passerelle est typiquement un modem ADSL (*Asymmetric Digital Subscriber Line* en anglais) servant de point d'accès sans fil de type WiFi. Mais toute autre technologie peut être utilisée. L'accès au réseau de communication, typiquement Internet, peut être réalisé par un réseau câblé, un réseau de fibres optiques ou encore un modem classique de type RTC sur le réseau téléphonique commuté. Selon certains modes de réalisation de l'invention, l'accès au réseau de communication peut utiliser une technologie téléphonique de réseau de données, par exemple GPRS (*General Packet Radio Service* en anglais), UMTS (*Universal Mobile Telecommunications System* en anglais) ou autre.

Le réseau local domestique peut être basé sur une technologie sans fil telle que le WiFi ou encore un réseau filaire, par exemple Ethernet. Dans certains modes de réalisation, le réseau domestique local sera réduit à une simple liaison point à point entre un client et un dispositif pouvant accéder à Internet. Cette connexion point à point peut être une connexion WiFi ou Bluetooth par exemple.

Des serveurs distants 1.7 sont connectés au réseau de communication. Ces serveurs peuvent dès lors être accédés depuis n'importe quel dispositif connecté au réseau local. La connexion au serveur passe alors par la passerelle 1.5.

Nous nous intéressons à des dispositifs connectés au réseau local et ayant accès à un réseau de communication tel qu'Internet par exemple. Nombre de ces dispositifs offrent un service à l'utilisateur. On peut citer par exemple la passerelle d'accès 1.5 elle-même, les téléviseurs connectés de dernière génération, les décodeurs de télévision numérique ou encore les compteurs d'énergie connectés comme les compteurs électriques de dernière génération.

En sus de leur service de base, ces appareils offrent typiquement un service de gestion de l'appareil. Ce service permet de personnaliser le service offert, de configurer le dispositif ou d'accéder à des données internes de ce dispositif. Ce service de gestion permet l'accès à un ensemble de ressources délivrées par le dispositif. Typiquement l'accès se fait depuis un client local connecté au réseau local en utilisant un navigateur de type navigateur WEB. Le service est alors implémenté sous la forme d'un serveur WEB intégré au dispositif devant être géré. L'utilisation d'un navigateur WEB, du protocole HTTP et donc d'une implémentation du service de gestion sous la forme d'un serveur WEB n'est qu'un exemple d'implémentation. D'autres protocoles et les outils associés peuvent également être utilisés en lieu et place.

Typiquement ces dispositifs sont des dispositifs grand public et leurs ressources sont limitées. Ils sont généralement contrôlés par un logiciel embarqué qui est typiquement stocké dans une mémoire non volatile réinscriptible, par exemple de type mémoire FLASH. Le service de gestion est alors intégré à ce logiciel de contrôle embarqué, typiquement sous la forme d'un ensemble de ressources statiques et dynamiques. Les ressources statiques comprennent des images, des pages HTML statiques, des textes, éventuellement de ressources audio et/ou vidéo. Les ressources dynamiques comprennent des données produites par le dispositif tel que, par exemple, des éléments de données statistiques comme des durées de connexion, des quantités de données échangées ou autres.

Ces dispositifs sont généralement gérés par un opérateur du service. Par exemple, les passerelles d'accès à Internet sont typiquement gérées par un fournisseur d'accès à Internet comme Orange, Free, SFR ou autres. Les décodeurs de télévision numérique sont gérés par des diffuseurs de télévision. Les compteurs électriques intelligents sont gérés par les fournisseurs d'énergie. Ces opérateurs gèrent un parc installé de dispositifs pouvant être très nombreux et regrouper des modèles hétérogènes. Il est avantageux pour ces opérateurs de pouvoir faire évoluer le service de gestion du dispositif. Ces évolutions peuvent être complexes et comprendre l'ajout de nouvelles fonctionnalités ou plus simplement elles peuvent concerner une simple modification de la charte graphique de l'opérateur. Dans ce dernier cas, il peut s'agir simplement du changement de quelques logos, graphiques ou feuilles de style. Une évolution du service nécessite alors la mise à jour du logiciel embarqué, typiquement par téléchargement d'une nouvelle version complète de ce logiciel. On peut alors être amené à mettre à jour un parc hétérogène de modèles ayant chacun sa version de logiciel embarqué pour simplement faire évoluer quelques données graphiques.

Il est également souhaitable de pouvoir apporter une version différente du service à certaines catégories d'utilisateurs, par exemple en fonction d'un niveau d'abonnement ou autre. Cela nécessite une multiplication des versions de logiciel embarqué complexe à gérer.

On peut également souhaiter agréger des données de provenance hétérogène. Prenons l'exemple d'un compteur électrique intelligent qui stocke des statistiques de consommation concernant les dernières 48 heures tandis que les données plus anciennes sont mémorisées sur un serveur distant. Il est alors avantageux de pouvoir donner accès à l'intégralité des données qu'elles soient mémorisées localement ou de manière distante, et ceci de manière transparente pour l'utilisateur.

L'invention permet de résoudre ces problèmes par l'utilisation au sein du dispositif d'un module de redirection sélective des requêtes (*reverse proxy* en anglais). De cette façon, certaines des ressources nécessaires au service de gestion peuvent être déportées sur un serveur distant. Ces ressources distantes seront accessibles par un client local au réseau de manière transparente pour ce client local.

Le fonctionnement du service de gestion est illustré par la Fig. 2. Sur cette figure, le client local 2.1 via son navigateur WEB 2.2 émet une requête 2.8 vers le dispositif 2.3 pour une ressource, typiquement une page WEB de gestion du service. Le dispositif comporte un module de redirection sélective de requête 2.4 et un serveur WEB local 2.5. Le module de redirection sélective 2.4 analyse alors la requête et évalue un critère en fonction de cette requête. Selon le mode de réalisation de l'invention, ce critère correspond à l'évaluation d'un domaine particulier de l'adresse de type URL (*Universal Ressource Locator* en anglais) de la ressource demandée.

En fonction de ce critère, la requête reçue du client local 2.1 va être redirigée soit vers le serveur WEB interne, échange 2.9, soit vers un serveur distant 2.6, échange 2.10. Dans ce dernier cas la requête 2.10 est alors gérée par un serveur WEB distant 2.7 opéré par le serveur distant 2.6. La réponse à cette requête est alors produite soit par le serveur WEB local 2.5, soit par le serveur WEB distant 2.7 pour être retournée, 2.9 et 2.11, au module de redirection sélective 2.4. Le module de redirection sélective 2.4 émet alors la réponse 2.12 vers le client local 2.1. Le résultat de la requête est alors affiché au sein du navigateur 2.2.

Les modules de redirection sélective sont connus pour servir de frontal d'un serveur WEB nécessitant une pluralité de serveurs effectifs. Ils sont alors utilisés pour cacher cette pluralité de serveurs derrière une seule adresse. Ils peuvent alors servir à la répartition de charge ou encore être un point unique de sécurisation des serveurs contre des attaques malveillantes.

Le service de gestion du dispositif est implémenté sous la forme de programmes interprétés (*scripts* en anglais) implantés au sein de pages HTML. Deux techniques d'implantation de tels programmes interprétés sont connues. Une première consiste à faire exécuter le programme par le serveur pour envoyer en réponse à la requête le résultat du programme. Cette technique nécessite de disposer de ressources de calcul et d'interprétation importante sur le serveur. Une seconde technique consiste à faire exécuter le programme par le navigateur. Dans ce cas, le programme est inclus dans la réponse à la requête, le navigateur exécute le programme reçu sur le client et affiche le résultat du programme. Il est possible de mélanger les deux techniques au sein d'une même implémentation de service. Dans le contexte de l'invention, les ressources du dispositif implémentant le serveur responsable du service de gestion étant limitées, la seconde technique est naturellement privilégiée.

Pour des raisons de sécurité, un programme interprété exécuté par un client dans un navigateur ne peut émettre de requête que vers le serveur sur lequel il a été téléchargé. Cette limitation vise à éviter les vulnérabilités connues sous le nom de programme inter-site ou XSS pour *cross site scripting* en anglais. Dans ce contexte, il ne serait donc pas possible à ce programme de requérir directement les ressources gérées par le serveur distant auprès de celui-ci. Cette contrainte est prise en compte par l'invention du fait que la communication du client local se fait exclusivement avec le dispositif. La solution décrite n'introduit donc aucune faille de sécurité.

Avantageusement, les ressources nécessaires au fonctionnement du service de gestion sont réparties entre le dispositif et le serveur distant en fonction de leur nature statique ou dynamique. Les données statiques sont constituées des textes, des images, de formulaires, de fichiers de feuilles de style par exemple des fichiers CSS (*Cascading Style Sheet* en anglais) entre autres. Les données dynamiques sont constituées de données calculées ou produites par le dispositif. Ces données sont typiquement locales. On choisit donc avantageusement de faire gérer l'accès de ces données dynamiques par le serveur local tandis que les données statiques sont gérées par le serveur distant. De cette façon, si l'opérateur choisit de changer la présentation du service de gestion il lui suffit de changer les données statiques sur le serveur distant pour que ce changement soit immédiatement effectif sur tous les dispositifs du parc.

L'implémentation de cette répartition apparaît dans les URL utilisées. Par exemple, une ressource locale peut avoir son URL ayant la forme : « /servlet/... ». Les ressources distantes pourront avoir la forme: «/...» ne comprenant pas le mot « servlet » en début. Alternativement un référencement explicite des ressources distantes peut aussi être adopté, par exemple : « /remote/... ». Dans certains modes de réalisation, les données distantes peuvent être réparties sur plusieurs serveurs. On peut alors avoir des URL de la forme : « /remotel/... », « /remote2/... », etc.

Avantageusement, la gestion d'une mémoire cache en local peut éviter le téléchargement répété des mêmes ressources distantes. Elles seront alors uniquement téléchargées lorsqu'elles sont modifiées. L'utilisation d'une mémoire cache permet également de disposer du service de gestion même en cas de coupure de la connexion avec le serveur distant. Cette mémoire cache permet d'éviter les téléchargements redondants si plusieurs clients locaux accèdent au service de gestion du même dispositif. Les clients locaux gèrent typiquement également une mémoire cache locale ce qui évite les requêtes redondantes au dispositif.

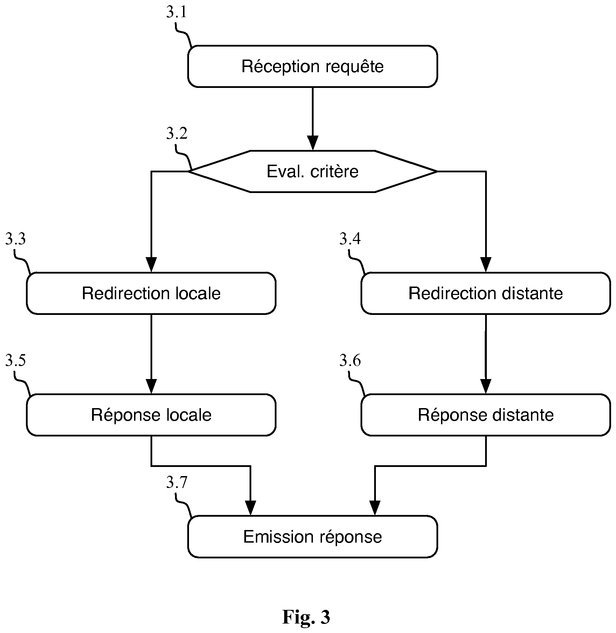

La Fig. 3 illustre l'algorithme de fonctionnement du module de redirection sélective selon l'invention.

Lors d'une première étape 3.1, le module reçoit une requête pour une ressource émise par un client local. Cette requête est typiquement une requête HTTP pour une URL.

Lors d'une étape 3.2, la requête reçue est analysée pour évaluer un critère de redirection. Typiquement il s'agit d'analyser le début de l'URL pour déterminer la destination de la requête. Tout type de critère peut être ici utilisé en fonction de l'implémentation choisie.

Si l'évaluation du critère détermine que la ressource doit être recherchée en local, on passe à l'étape 3.3 de redirection locale de la requête. Si la ressource doit être recherchée sur un serveur distant, on passe à l'étape 3.4 de redirection distante de la requête vers un serveur distant.

On reçoit alors la réponse du serveur vers lequel a été dirigée la requête. On reçoit donc soit une réponse locale, étape 3.5, soit une réponse distante, étape 3.6.

Dans une dernière étape 3.7, on émet la réponse reçue vers le client local à l'origine de la requête.

On constate donc que l'invention permet de simplifier l'administration d'un service de gestion embarqué dans le logiciel d'un dispositif électronique. Cette simplification se fait sans introduire de faille de sécurité.

## Revendications

1. Procédé de gestion de l'accès à un ensemble de ressources délivrées par un dispositif électronique (2.3), ledit dispositif étant contrôlé par un logiciel embarqué stocké en mémoire non volatile réinscriptible, comportant les étapes suivantes exécutées par ledit dispositif :
- une étape (3.1) de réception d'une requête émise par un client local (2.1) connecté audit dispositif pour une ressource gérée par ledit dispositif ;
- une étape (3.2) d'évaluation de la nature statique ou dynamique de ladite ressource par un module de redirection sélective (2.4) au sein dudit dispositif, les ressources statiques étant des données gérées par un serveur distant (2.7) de ressources accessible par ledit dispositif, les ressources dynamiques comprenant des données produites par le dispositif électronique ;
- une étape (3.3, 3.4) de redirection de ladite requête en fonction du résultat de l'évaluation dudit critère à un serveur local (2.5) de ressources lorsque la ressource est dynamique ou au serveur distant (2.7) lorsque la ressource est statique ;
- une étape d'émission (3.7) vers le client local de la réponse faite par le serveur vers lequel la requête a été dirigée.

2. Procédé selon la revendication 1, **caractérisé en ce que** les requêtes et les réponses sont au format HTTP.

3. Procédé selon la revendication 2, **caractérisé en ce que** l'étape d'évaluation d'un critère comprend une étape d'analyse de l'URL désignant la ressource.

4. Procédé selon l'une des revendications 1 à 3, **caractérisé en ce que** l'étape de redirection redirige la requête vers un serveur local ou une pluralité de serveurs distants.

5. Dispositif électronique comprenant un service de gestion de l'accès à un ensemble de ressources délivrées par ledit dispositif électronique, ledit dispositif étant contrôlé par un logiciel embarqué stocké en mémoire non volatile réinscriptible et comportant :
- des moyens pour recevoir une requête émise par un client local connecté audit dispositif pour une ressource gérée par ledit dispositif ;
- des moyens pour évaluer la nature statique ou dynamique de ladite ressource par un module de redirection sélective au sein dudit dispositif, les ressources statiques étant des données gérées par un serveur distant (2.7) de ressources accessible par ledit dispositif, les ressources dynamiques comprenant des données produites par le dispositif électronique ;
- des moyens pour rediriger ladite requête en fonction du résultat de l'évaluation dudit critère à un serveur local de ressources lorsque la ressource est dynamique ou au serveur distant (2.7) lorsque la ressource est statique ;
- des moyens pour émettre vers le client local de la réponse faite par le serveur vers lequel la requête a été dirigée.

6. Programme d'ordinateur **caractérisé en ce qu'**il est adapté pour contrôler un dispositif électronique et mettre en oeuvre un procédé de gestion de l'accès à un ensemble de ressources délivrées par un dispositif électronique (2.3) selon l'une quelconque des revendications 1 à 4.

7. Support d'enregistrement non volatile réinscriptible, adapté pour être embarqué dans un dispositif électronique, sur lequel est stocké le programme d'ordinateur selon la revendication précédente.

## Patentansprüche

1. Verfahren zur Verwaltung des Zugangs zu einer Einheit von von einer elektronischen Vorrichtung (2.3) gelieferten Ressourcen, wobei die Vorrichtung von einer eingebauten Software gesteuert wird, die in einem wiederbeschreibbaren nichtflüchtigen Speicher gespeichert ist, das die folgenden von der Vorrichtung ausgeführten Schritte aufweist:
- einen Schritt (3.1) des Empfangs einer von einem mit der Vorrichtung verbundenen lokalen Client (2.1) gesendeten Anforderung für eine von der Vorrichtung verwaltete Ressource;
- einen Schritt (3.2) der Bewertung der statischen oder dynamischen Beschaffenheit der Ressource durch ein Modul zur selektiven Weiterleitung (2.4) innerhalb der Vorrichtung, wobei die statischen Ressourcen Daten sind, die von einem für die Vorrichtung zugänglichen fernen Ressourcen-Server (2.7) verwaltet werden, wobei die dynamischen Ressourcen Daten enthalten, die von der elektronischen Vorrichtung erzeugt werden;
- einen Schritt (3.3, 3.4) der Weiterleitung der Anforderung abhängig vom Ergebnis der Bewertung des Kriteriums an einen lokalen Ressourcen-Server (2.5), wenn die Ressource dynamisch ist, oder an den fernen Server (2.7), wenn die Ressource statisch ist;
- einen Schritt des Sendens (3.7) der von dem Server, an den die Anforderung gerichtet wurde, gegebenen Antwort an den lokalen Client.

2. Verfahren nach Anspruch 1, **dadurch gekennzeichnet, dass** die Anforderungen und die Antworten im Format HTTP sind.

3. Verfahren nach Anspruch 2, **dadurch gekennzeichnet, dass** der Schritt der Bewertung eines Kriteriums einen Schritt der Analyse der die Ressource bezeichnenden URL enthält.

4. Verfahren nach einem der Ansprüche 1 bis 3, **dadurch gekennzeichnet, dass** der Weiterleitungsschritt die Anforderung an einen lokalen Server oder eine Vielzahl ferner Server weiterleitet.

5. Elektronische Vorrichtung, die einen Verwaltungsdienst des Zugangs zu einer Einheit von von der elektronischen Vorrichtung gelieferten Ressourcen enthält, wobei die Vorrichtung von einer in einem wiederbeschreibbaren nichtflüchtigen Speicher gespeicherten eingebauten Software gesteuert wird und aufweist:
- Einrichtungen für den Empfang einer von einem mit der Vorrichtung verbundenen lokalen Client gesendeten Anforderung für eine von der Vorrichtung verwaltete Ressource;
- Einrichtungen zur Bewertung der statischen oder dynamischen Beschaffenheit der Ressource durch ein Modul zur selektiven Weiterleitung innerhalb der Vorrichtung, wobei die statischen Ressourcen von einem für die Vorrichtung zugänglichen fernen Ressourcen-Server (2.7) verwaltete Daten sind, wobei die dynamischen Ressourcen von der elektronischen Vorrichtung erzeugte Daten enthalten;
- Einrichtungen zur Weiterleitung der Anforderung abhängig vom Ergebnis der Bewertung des Kriteriums an einen lokalen Ressourcen-Server, wenn die Ressource dynamisch ist, oder an den fernen Server (2.7), wenn die Ressource statisch ist;
- Einrichtungen zum Senden der Antwort des Servers, an den die Anforderung gerichtet war, an den lokalen Client.

6. Computerprogramm **dadurch gekennzeichnet, dass** es geeignet ist, eine elektronische Vorrichtung zu steuern und ein Verfahren zur Verwaltung des Zugangs zu einer Einheit von Ressourcen durchzuführen, die von einer elektronischen Vorrichtung (2.3) nach einem der Ansprüche 1 bis 4 geliefert werden.

7. Wiederbeschreibbarer nichtflüchtiger Speicherträger, der geeignet ist, in eine elektronische Vorrichtung eingebaut zu werden, auf dem das Computerprogramm nach dem vorhergehenden Anspruch gespeichert ist.

## Claims

1. Method for managing access to a set of resources delivered by an electronic device (2.3), the said device being controlled by embedded software stored in rewritable nonvolatile memory, comprising the following steps executed by the said device:
- a step (3.1) of receiving a request emitted by a local client (2.1) connected to the said device for a resource managed by the said device;
- a step (3.2) of evaluating the static or dynamic nature of the said resource by a selective redirection module (2.4) within the said device, the static resources being data managed by a remote server (2.7) of resources which is accessible by the said device, the dynamic resources comprising data produced by the electronic device;
- a step (3.3, 3.4) of redirecting the said request as a function of the result of the evaluation of the said criterion to a local server (2.5) of resources when the resource is dynamic or to the remote server (2.7) when the resource is static;
- a step (3.7) of emitting to the local client the response made by the server to which the request was directed.

2. Method according to Claim 1, **characterized in that** the requests and the responses are in the HTTP format.

3. Method according to Claim 2, **characterized in that** the step of evaluating a criterion comprises a step of analysing the URL designating the resource.

4. Method according to one of Claims 1 to 3, **characterized in that** the redirection step redirects the request to a local server or a plurality of remote servers.

5. Electronic device comprising a service for managing access to a set of resources delivered by the said electronic device, the said device being controlled by embedded software stored in rewritable nonvolatile memory and comprising:
- means for receiving a request emitted by a local client connected to the said device for a resource managed by the said device;
- means for evaluating the static or dynamic nature of the said resource by a selective redirection module within the said device, the static resources being data managed by a remote server (2.7) of resources which is accessible by the said device, the dynamic resources comprising data produced by the electronic device;
- means for redirecting the said request as a function of the result of the evaluation of the said criterion to a local server of resources when the resource is dynamic or to the remote server (2.7) when the resource is static;
- means for emitting to the local client the response made by the server to which the request was directed.

6. Computer program **characterized in that** it is adapted to control an electronic device and implement a method for managing access to a set of resources delivered by an electronic device (2.3) according to any one of Claims 1 to 4.

7. Rewritable nonvolatile recording medium, adapted to be embedded in an electronic device, on which is stored the computer program according to the preceding claim.
